# EUROPEAN PATENT APPLICATION

(11) **EP 1 072 377 A1**
(43) Date of publication of application: **31.01.2001**
(21) Application number: 00116379.9
(22) Date of filing: 28.07.2000
(51) Int. Cl.: B29C 45/00, B29L 31/22, B65D 23/00, B29C 49/00

(54) **A plastic bottle with a member for suspending the bottle formed on its neck portion**

(30) Priority: 29.07.1999 JP 21511199
(71) Applicant: A.K. TECHNICAL LABORATORY, INC.,, Hanishina-gun, Nagano-ken (JP)
(72) Inventor: Tamura, Yasushi, Hanishina-gun, Nagano-ken (JP)
(74) Representative: Leitner, Waldemar, Dr. techn.

(57) **Abstract**

A blow molded plastic bottle with a suspending member formed on its neck portion. In the stage of injection-molding a preform made of a crystalline resin material, the suspending member shaped like a flat plate is formed integrally on the side of the lower part of the neck portion in such a way as to extend laterally with its flat surface directed upward. The suspending member has its end integrally formed on the side of the neck portion and stretched by pulling to form a thin-walled bend. The stretched-orientation characteristics of the bend are effectively exploited to impart bending strength and flexibility to the suspending member so that it is bent freely in upward and downward directions.

## Description

### BACKGROUND OF THE INVENTION

### 1. Field of the Invention

The present invention relates to a plastic bottle with a member for suspending the bottle (hereinafter referred to as the suspending member) formed on its neck portion, and more particularly to a plastic bottle provided with a suspending member which is injection-molded on the side of the bottle neck so as to be integrated therewith, the suspending member being designed to be bent freely in upward and downward directions.

### 2. Detailed Description of the Prior Art

In the prior art, a plastic bottle with a suspending member (or a handle) is known in Japanese Patent Application Laid-Open No. Hei 9-141732. In this plastic bottle, in the stage of injection-molding a preform for the bottle, a suspending member shaped like a flat, elongated-widthwise plate is injection-molded on the side of the lower part of the neck portion so as to be integrated therewith. The injection-molded suspending member is designed to serve as a suspending member for use in a biaxially-oriented plastic bottle manufactured by a stretch-blow molding technique.

The plastic bottle with a suspending member disclosed in this publication is provided with a connecting piece which acts as the connection between the suspending member and the bottle body. At an intermediate portion of the connecting piece is formed to be a narrow portion across the width thereof. Thereby the thickness of the intermediate portion of the connecting piece is reduced to allow an annular gripping portion to be bent freely in upward and downward directions with respect to the narrow portion. Moreover, by exploiting the flow-orientation characteristics of the resin material formed into the narrow portion, it is possible to secure adequate flexibility and bending strength over the gripping portion. In this way, it is possible to realize a suspending member that, despite being formed as an injection-molded flat plate, is made resistant to repeated use.

In the plastic bottle having a suspending member formed integrally therewith, however, providing a narrow portion in the connecting piece leads to an undesirable increase in the flow resistance of the molten resin material formed into the gripping portion. Moreover, the suspending member needs to be elongated laterally in accordance with the size of the bottle. Accordingly, an increase in the lateral length of the suspending member is necessarily accompanied by an increase in the flow distance of the molten resin material. Furthermore, as compared with a mold for molding a preform for an ordinary plastic bottle, in the mold therefor used here, an increase in a cavity projected area is unavoidable. In the light of the foregoing, it will be understood that it is difficult to achieve molding of such a bottle properly and that weld lines inconveniently tend to occur in the central portion of the gripping portion.

### SUMMARY OF THE INVENTION

The present invention has been completed in order to solve the above-mentioned problems due to the formation of the narrow portion at the connecting piece between the suspending member and the bottle body, and an object of the present invention is to provide a plastic bottle which has, on its neck portion, a suspending member having a novel construction and offering sufficient durability.

To achieve the above-mentioned object, according to one aspect of the present invention, a blow molded plastic bottle has a suspending member formed on its neck portion. In the stage of injection-molding the preform made of a crystalline resin material, the suspending member shaped like a flat plate is integrally formed on the side of the lower part of the neck portion in such a way as to extend laterally with its flat surface directed upward. The suspending member has its end integrally connected to the side of the neck portion and been stretched by pulling to form a thin-walled bend, thereby becoming longer than the injection-molded suspending member. The stretched-orientation characteristics of the bend are effectively exploited to impart bending strength and flexibility to the suspending member so that it is bent freely in upward and downward directions.

As the afore-mentioned crystalline resin material, it is preferable to employ polyester resin such as polyethylene terephthalate (PET), polyethylene naphthalate (PEN), or the like. It is possible to use a mixture of resin materials as mentioned just above instead, as long as the mixture ratio is set properly.

The bottle can be formed either by an injection-blow molding technique or by a stretch-blow molding technique. According to the former, an injection-molded preform is transferred together with the injection core to a blow mold and blow air is immediately introduced therein to effect blow molding of the bottle. According to the latter, an injection-molded preform is stretched and is blown within a blow mold to form a bottle with a thin-walled body portion.

### BRIEF DESCRIPTION OF THE DRAWINGS

These and other objects and advantages of the present invention will become clear from the following description with reference to the accompanying drawings, wherein:
Fig. 1 is a front view illustrating a plastic bottle with a suspending member formed on its neck portion according to the present invention;
Fig. 2 is a plan view of the plastic bottle of the embodiment according to the present invention;
Fig. 3 is an explanatory view of assistance in explaining the molded condition of the preform with a suspending member formed therein;
Fig. 4 is a vertical cross section illustrating the suspending member employed in the plastic bottle of the embodiment according to the present invention;
Fig. 5 is a plan view of the neck portion of the bottle, illustrating the heat-softened portion of the suspending member;
Fig. 6 is a plan view of the neck portion of the bottle, illustrating the suspending member stretched by pulling;
Fig. 7 is a plan view of the neck portion of the bottle, illustrating the suspending member employed in another embodiment; and
Fig. 8 is a plan view of the neck portion of the bottle, illustrating the heat-softened portion of the suspending member.

### DETAILED DESCRIPTION OF THE PREFERRED EMBODIMENTS

Hereinafter, the present invention will be described in detail with reference to the accompanying drawings. Note that the present invention is not limited to the constructions of the embodiments described in this specification.

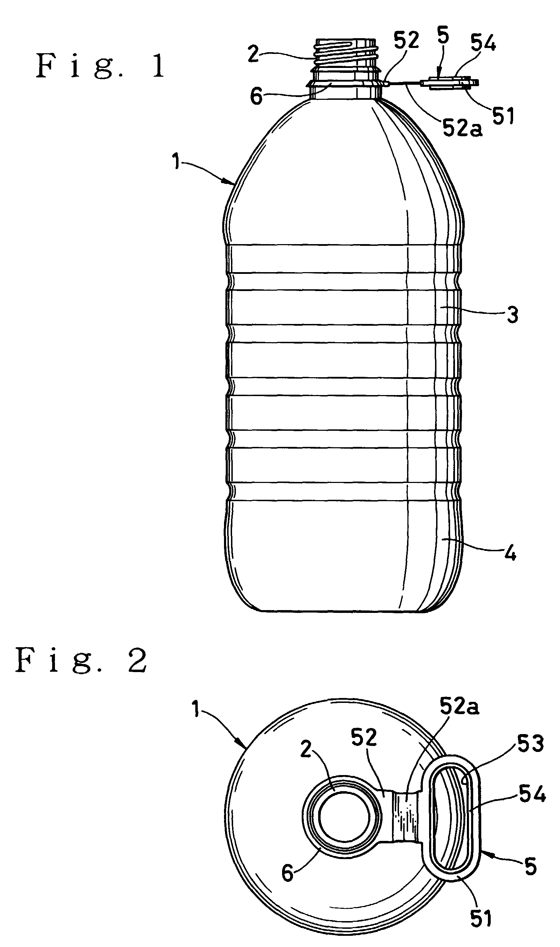

In the figures, reference numeral 1 represents a bottle made of polyethylene terephthalate. In the bottle 1, except for a neck portion 2 which is still kept in its injection-molded shape, a body portion 3 and a bottom portion 4 are both made thin-walled by a stretch-blow molding technique. On the side of the lower part of the neck portion 2 is formed integrally a suspending member 5, which is shaped like a flat plate, in such a way as to extend laterally with its flat surface directed upward. Note that, in Fig. 1, the suspending member 5 is formed contiguously and in one piece with a ring 6 which is formed circumferentially around the outer surface of the lower part of the neck portion 2. The ring 6 may act as a support ring for supporting the bottle 1 during filling of contents.

Figs. 1 to 6 show the bottle of a first embodiment of the present invention. The bottle of this embodiment is manufactured by a stretch-blow molding technique, and is provided with the suspending member 5 that is integrally formed on the side of the lower part of the neck portion in such a way as to extend laterally with its flat surface directed upward. The suspending member 5 is composed of an annular gripping portion 51 and a connecting piece 52 acting as the connection between the gripping portion 51 and the side of the neck portion. The gripping portion 51 has, on its flat surface, an opening 53 through which a middle finger and other two fingers, of which each is immediately adjacent thereto, are put into. Moreover, the gripping portion 51 has a wall thickness of about 1.5 to 2.0 mm and is formed in an annular shape with a relatively large diameter. The connecting piece 52 is provided with a bend 52a. The formation of the bend 52a is achieved in the following manner. After a part of the outer surface of the ring 6 is extended widthwise so as to be formed into a short flat plate that acts as the connecting piece 52 and a part of the connecting piece 52 is heated to be softened, a pulling force is applied thereto so that it is further extended widthwise to form the bend 52a. The thin-walled bend 52a thus obtained has a wall thickness of about 0.1 to 0.5 mm. At the extremity of the bend 52a is formed the gripping portion 51 integrally and contiguously.

The gripping portion 51 has a projecting rim 54 formed integrally along its inner rim. The projecting rim 54 is so designed as to extend vertically therefrom with a relatively large width. This construction makes it possible to secure sufficient strength in the gripping portion 51 and thus prevent its deformation caused by an excessive load. Moreover, this construction helps increase the contact surface area with fingers, and thereby free users from possibly uncomfortable carrying.

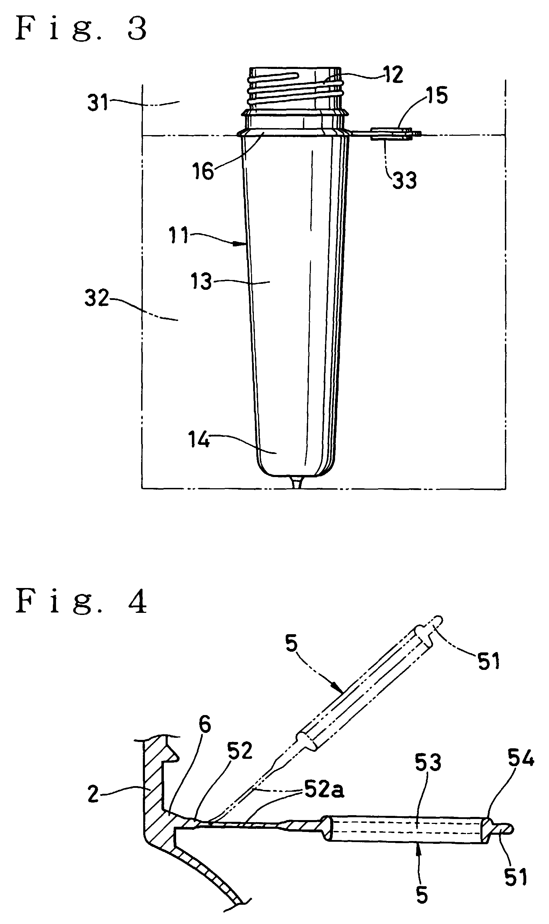

As shown in Fig. 3, the suspending member 5, before being subjected to be stretched, can be formed by the injection-molding technique at the same time when injection-molding a preform 11. The formation of the suspending member 5 is achieved in the following manner. A neck portion 12 has a ring 16 formed circumferentially around the outer surface of the lower part thereof. A yet-to-be stretched suspending member 15 is formed contiguously and in one piece with the ring 16. A flat cavity 33 for the suspending member 15 is formed at the interface between an injection mold 31 for forming the neck portion 12 and an injection mold 32 for forming a body portion 13 and a bottom portion 14. Thereafter, the molten resin material injection-charged from the center of the bottom portion 14 is charged via the ring 16 up to the cavity 33. In this way, the formation of the yet-to-be stretched suspending member 15 is achieved with ease.

Moreover, in the stage of molding the preform 11, the connecting piece 52, before being stretched, is made shorter in a widthwise length to such an extent that heat can be applied thereto by using heating means such as an electric heater, an impulse heater, high-frequency heating, or the like. This construction helps prevent an undesirable increase in the cavity projected area observed in the injection-molding operation.

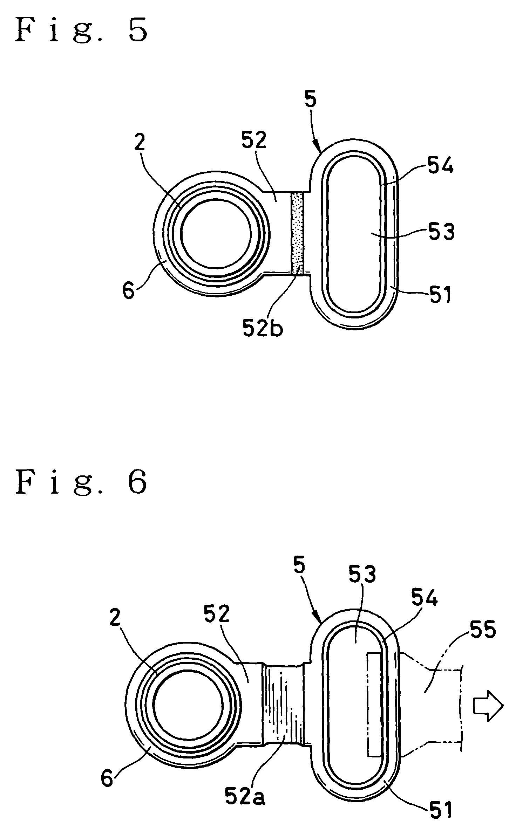

As shown in Fig. 5, the connecting piece 52 as described above, after being molded, is heated across the width thereof by applying thereto a heating member (not shown) having a heating portion with a predetermined width (about 5mm) provided therein. In a case where a PET resin material is employed, the part to be heated of the connecting piece 52 typically can be heated to be softened to at least 90°C or more. Subsequently, while the temperature of the resultant heat-softened portion 52b is still greater than the glass transition temperature, for example, as shown in Fig. 6, with a suitable jig 55 engaged with the gripping portion 51, the suspending member 5 is pulled outward by about 25 mm. As a result, the heat-softened portion 52b, which originally has a wall thickness of about 1.5 mm, is so stretched as to form the bend 52a having a wall thickness of about 0.3 mm, and simultaneously the suspending member 5 is extended widthwise. Moreover, by exploiting the stretched-orientation characteristics of the resin material formed into the bend 52a, it is possible to impart sufficient bending strength and flexibility to the suspending member 5, and thereby, as shown in Fig. 4, the suspending member 5 can be bent freely in upward and downward directions.

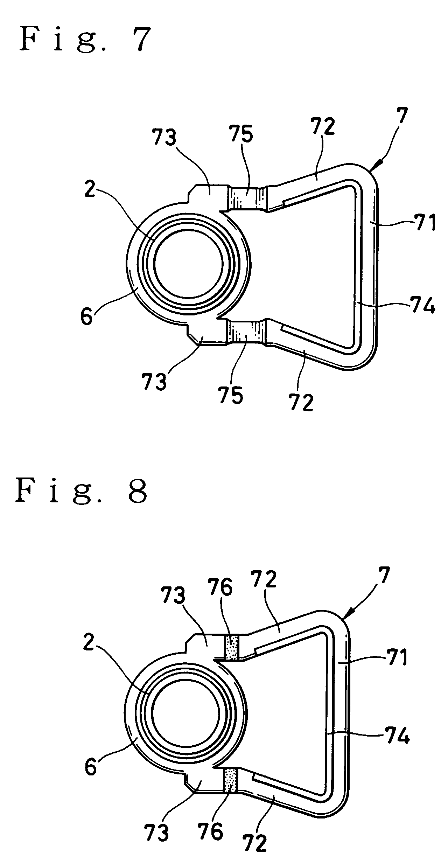

Figs. 7 and 8 show another embodiment of the present invention. The blow molded bottle of this embodiment has a suspending member 7 formed integrally therewith. The suspending member 7 is composed of a gripping portion 71 and arm portions 72 which are formed on both sides of the gripping portion 71. The arm portions 72 have their ends formed integrally and arranged along opposite sides of the side of the neck portion 2 so as to form bases 73. The suspending member 7 is formed integrally on the side of the lower part of the neck portion 2 in such a way as to extend laterally with its flat surface directed upward. Note that, in the figures, for simplicity's sake, the bottle body is omitted and only the neck portion 2, the ring 6 formed on the lower part thereof, and the suspending member 7, as seen from above, are shown. The gripping portion 71 and the arm portions 72 provided on both sides thereof are formed in an integral configuration and shaped like a flat, portal-shaped plate having a wall thickness of about 1.5 to 2.0 mm. The gripping portion 71 has a projecting rim 74 formed integrally along its inner rim. The projecting rim 74 is so designed as to extend vertically therefrom with a relatively large width.

Moreover, the boundary between the base 73 and the arm portion 72, after being heated and softened, is stretched by pulling so as to form a thin-walled bend 75 having a wall thickness of about 0.1 to 0.5 mm. By exploiting the stretched-orientation characteristics of the resin material formed into the bend 75, it is possible to impart sufficient bending strength and flexibility to the suspending member 7 so that it can be bent freely in upward and downward directions.

The bend 75 of this embodiment is constructed basically in the same manner as that of the first embodiment. The boundary between the base 73 and the arm portion 72, which are formed integrally and contiguously on the side of the neck portion 2, is heated and softened by applying thereto a heating member such as an impulse heater. Subsequently, while the temperature of the resultant heat-softened portion 76 is still greater than the glass transition temperature, with a suitable jig engaged with the gripping portion 71, the suspending member 7 is pulled outward to be stretched. In this way, the bend 75 is formed with ease. By thus achieving the stretching formation of the bend 75, the suspending member 7 can be extended widthwise.

In all of these embodiments described above, re-shaping of a short-length injection-molded suspending member, which is performed by means of application of heat and a pulling force for stretching, can be achieved either immediately after the preform 11 is injection molded or after the injection-molded preform 11 is blown into the bottle 1. The timing of the re-shaping operation depends upon the molding technique employed in the bottle formation. Moreover, the bend may be stretched by pulling at least 3 times its original length, i.e., the length of the heat-softened portion.

As described heretofore, according to the present invention, it is possible to secure adequate bending strength and flexibility in a suspending member by exploiting the stretched-orientation characteristics of a bend that is thin-walled by pulling, instead of the flow-orientation characteristics of a narrow portion provided in a connecting piece. This allows the injection-molded suspending member to be made shorter in length than ever, and thus simplifies the injection molding operation. Moreover, in the cavity of the suspending member, reduction in the flow resistance is successfully achieved. This helps prevent occurrence of weld lines. Accordingly, it is possible to realize a suspending member that, despite being injection-molded in one piece with a bottle neck, offers satisfactory bending strength and durability.

While the presently preferred embodiments of the present invention have been shown and described, it will be understood that the present invention is not limited thereto, and that various changes and modifications may be made by those skilled in the art without departing from the scope of the invention as set forth in the appended claims.

## Claims

1. A blow molded plastic bottle with a suspending member formed on its neck portion,
wherein, in a stage of injection-molding a preform made of a crystalline resin material, said suspending member shaped like a flat plate is formed integrally on a side of a lower part of said neck portion in such a way as to extend laterally with its flat surface directed upward,
wherein said suspending member has its end integrally formed to said side of said neck portion and stretched by pulling to form a thin-walled bend,
and wherein stretched-orientation characteristics of said bend is effectively exploited to impart bending strength and flexibility to said suspending member so that said suspending member is bent freely in upward and downward directions.

2. A plastic bottle as claimed in claim 1,
wherein said suspending member comprises:
an annular gripping portion with a relatively large width; and
a connecting piece that acts as a connection between said gripping portion and said side of said neck portion,
wherein a part of said connecting piece, after being heated and softened, is stretched by pulling to form a thin-walled bend.

3. A plastic bottle as claimed in claim 1,
wherein said suspending member is formed into a flat, portal-shaped plate composed of a gripping portion and arm portions formed on both sides thereof, said arm portions having their ends formed integrally and arranged along opposite sides of said neck portion so as to form a base,
wherein said suspending member is formed integrally on said side of said lower part of said neck portion in such a way as to extend laterally with its flat surface directed upward,
and wherein a boundary between said base and said arm portion, after being heated and softened, is stretched by pulling to form a thin-walled bend.

4. A plastic bottle as claimed in claim 1, wherein said suspending member is formed contiguously and in one piece with a ring, said ring being formed circumferentially around an outer surface of said lower part of said neck portion.

5. A plastic bottle as claimed in claim 2, wherein said suspending member is formed contiguously and in one piece with a ring, said ring being formed circumferentially around an outer surface of said lower part of said neck portion.

6. A plastic bottle as claimed in claim 3, wherein said suspending member is formed contiguously and in one piece with a ring, said ring being formed circumferentially around an outer surface of said lower part of said neck portion.
